# EUROPÄISCHE PATENTSCHRIFT

(11) **EP 3 140 707 B1**
(45) Veröffentlichungstag und Bekanntmachung des Hinweises auf die Patenterteilung: **13.03.2019**
(21) Anmeldenummer: 15724528.3
(22) Anmeldetag: 04.05.2015
(51) Int. Cl.: G05B 19/042

(54) **VORRICHTUNG ZUR ANBINDUNG EINER INTERNETFÄHIGEN ANZEIGE- UND EINGABEEINRICHTUNG AN EIN ZU STEUERNDES ODER ZU REGELNDES ARBEITSGERÄT**
DEVICE FOR CONNECTING AN INTERNET-CAPABLE DISPLAYING AND INPUT APPARATUS TO A TOOL TO BE CONTROLLED IN AN OPEN-LOOP OR CLOSED-LOOP MANNER
DISPOSITIF POUR LA CONNEXION D'UN SYSTÈME D'ENTRÉE ET D'AFFICHAGE COMPATIBLE INTERNET À UN OUTILLAGE À COMMANDER OU À RÉGULER

(30) Priorität: 09.05.2014 DE 102014106584
(43) Veröffentlichungstag der Anmeldung: 15.03.2017
(73) Patentinhaber: CLAAS E-Systems KGaA mbH & Co KG, 33330 Gütersloh (DE)
(72) Erfinder: PFLANZE, Sascha, 88348 Braunenweiler (DE)
(74) Vertreter: Budach, Steffen
(86) Internationale Anmeldenummer: PCT/EP2015/059733
(87) Internationale Veröffentlichungsnummer: WO 2015/169757

(56) Entgegenhaltungen:
- WO-A2-03/088011
- DE-A1-102007 042 238

## Beschreibung

Die Erfindung betrifft eine Vorrichtung zur Anbindung einer internetfähigen Anzeige- und Eingabeeinrichtung, insbesondere eines Tablet-Computers oder eines Mobiltelefons, an ein zu steuerndes oder zu regelndes Arbeitsgerät.

Im Betrieb von zum Beispiel landwirtschaftlichen Arbeitsgeräten, wie zum Beispiel im Betrieb einer Kombination eines landwirtschaftlichen Zugfahrzeugs mit einem landwirtschaftlichen Anhängegerät, spielt der Einsatz der Automatisierungs- und Informationstechnik eine immer größere Bedeutung. Dabei tauschen die Baugruppen eines Arbeitsgeräts über einen Datenbus, der in der Landwirtschaft auch als ISO-Datenbus bezeichnet wird, untereinander Daten aus. So tauscht zum Beispiel ein landwirtschaftliches Zugfahrzeug mit einem landwirtschaftlichen Anhängergerät Daten über den ISO-Datenbus aus.

Beim Datenaustausch zu Automatisierungs- und Informationszwecken spielt die funktionale Sicherheit des Datenaustausches eine entscheidende Bedeutung. Dabei müssen nach der Praxis alle Komponenten bzw. Teilsysteme eines zu steuernden oder zu regelnden Arbeitsgeräts definierte Sicherheitsanforderungen, sogenannte Performancelevel, erfüllen, die im Bereich der Landwirtschaft als Agricultural Performance Level (AgPL) bezeichnet werden.

Nur solche Baugruppen eines zu betreibenden bzw. zu steuernden und/oder zu regelnden Arbeitsgeräts, die solche Performance Level erfüllen, können im Bereich der Landwirtschaft über den ISO-Datenbus zur gegenseitigen Beeinflussung der Steuerung bzw. Regelung Daten austauchen, nämlich um eine Baugruppe ausgehend von einer anderen Baugruppe zu steuern und/oder zu regeln. Ähnliche Anforderungen bestehen auch im Bereich der Automobiltechnik, der Fertigungstechnik oder anderen technischen Bereichen, in welchen sicherheitsrelevante Baugruppen eines Arbeitsgeräts über einen Datenbus kommunizieren.

Im täglichen Leben finden zunehmend internetfähige Anzeige- und Eingabeeinrichtungen, wie zum Beispiel internetfähige Tablet-Computer oder internetfähige Mobiltelefone, Verwendung. Dabei besteht zunehmend Bedarf, auch im Betrieb eines zu steuernden oder zu regelnden Arbeitsgeräts eine solche internetfähige Anzeige- und Eingabeeinrichtung an ein zu steuerndes oder zu regelndes Arbeitsgerät zu koppeln und ausgehend von dem internetfähigen Anzeige- und Eingabegerät die Steuerung oder Regelung des Arbeitsgeräts zu beeinflussen.

Da es sich bei beispielweise aus der DE102007042238 oder WO03/088011 bekannten internetfähigen Anzeige- und Eingabeeinrichtungen jedoch nicht um Baugruppen handelt, die unter dem Gesichtspunkt einer sicherheitsrelevanten Kommunikation über einen Datenbus, wie zum Beispiel über einen ISO-Datenbus, konstruiert bzw. entwickelt sind, ist es bislang nicht möglich, die Steuerung oder Regelung eines über einen Datenbus zu steuernden oder zu regelnden Arbeitsgeräts ausgehend von einer internetfähigen Anzeige- und Eingabeeinrichtung zu beeinflussen.

Dann, wenn eine internetfähige Anzeige- und Eingabeeinrichtung an ein über einen Datenbus zu steuerndes oder zu regelndes Arbeitsgerät angeschlossen werden kann, ist es bislang lediglich möglich, das internetfähige Anzeige- und Eingabegerät zur Datenaufzeichnung bzw. zum Datensammeln von Daten des zu steuernden oder zu regelnden Arbeitsgeräts zu benutzen. Bislang ist es jedoch nicht möglich, den Betrieb, nämlich die Steuerung oder Regelung, des Arbeitsgeräts ausgehend von einer solchen interfähigen Anzeige- und Eingabeeinrichtung zu beeinflussen. So erfüllen nämlich Tablet-Computer oder internetfähige Mobiltelefone keine hierzu erforderlichen Performancelevel, insbesondere keine Agricultural Performance Level (AgPL).

Hiervon ausgehend liegt der vorliegenden Erfindung die Aufgabe zugrunde, eine neuartige Vorrichtung zur Anbindung einer internetfähigen Anzeige- und Eingabeeinrichtung an ein zu steuerndes oder zu regelndes Arbeitsgerät zu schaffen, mit der es möglich ist, die Steuerung oder Regelung des Arbeitsgeräts ausgehend von einer interfähigen Anzeige- und Eingabeeinrichtung zu beeinflussen, und zwar dann, wenn die interfähigen Anzeige- und Eingabeeinrichtung keine Performancelevel erfüllt.

Diese Aufgabe wird durch eine Vorrichtung nach Anspruch 1 gelöst. Die erfindungsgemäße Vorrichtung zur Anbindung einer internetfähigen Anzeige- und Eingabeeinrichtung, insbesondere eines Tablet-Computers oder eines Mobiltelefons, an ein über einen Datenbus zu steuerndes und/oder zu regelndes Arbeitsgerät, weist zumindest folgende Mittel auf: mindestens eine erste Schnittstelle zum Datenaustausch mit der internetfähigen Anzeige- und Eingabeeinrichtung; mindestens eine zweite Schnittstelle zum Datenaustausch mit dem zu steuernden und/oder zu regelnden Arbeitsgerät; ein Überprüfungsmittel zur Überprüfung einer ordnungsgemäßen Funktion der internetfähigen Anzeige- und Eingabeeinrichtung; ein Überführungsmittel, um dann, wenn das Überprüfungsmittel eine nicht-ordnungsgemäße Funktion der internetfähigen Anzeige- und Eingabeeinrichtung erkennt, das Arbeitsgerät in einen sicheren Zustand zu überführen.

Mit Hilfe der erfindungsgemäßen Vorrichtung wird es erstmals möglich, eine internetfähige Anzeige- und Eingabeeinrichtung unter Gewährleistung der Funktionssicherheit an ein über einen Datenbus zu steuerndes oder zu regelndes Arbeitsgerät zu koppeln und demnach eine Beeinflussung der Steuerung oder Regelung des Arbeitsgeräts ausgehend von der internetfähigen Anzeige- und Eingabeeinrichtung zuzulassen. Die erfindungsgemäße Vorrichtung überwacht dabei die ordnungsgemäße Funktion der internetfähigen Anzeige- und Eingabeeinrichtung und überführt das Arbeitsgerät dann, wenn eine nicht-ordnungsgemäße Funktion der internetfähigen Anzeige- und Eingabeeinrichtung erkannt wird, in einen sicheren Zustand. Die erfindungsgemäße Vorrichtung bildet demnach einen Watchdog für die internetfähige Anzeige- und Eingabeeinrichtung, um die Funktionssicherheit des gesamten Steuerungssystems zu gewährleisten. Am Arbeitsgerät kann zum Schutz vor Schadsoftware eine Firewall vorgesehen werden.

Nach einer vorteilhaften Weiterbildung der Erfindung stellt die oder jede erste Schnittstelle, die dem Datenaustausch mit der internetfähigen Anzeige- und Eingabeeinrichtung dient, für den Datenaustausch sicherheitsrelevanter, applikationsabhängiger Daten zwischen einer Applikation der Anzeige- und Eingabeeinrichtung, die der Steuerung und/oder Regelung des Arbeitsgeräts dienen, und für den Datenaustausch funktionsüberprüfungsrelevanter Daten, die der Überprüfung der ordnungsgemäßen Funktion der internetfähigen Anzeige- und Eingabeeinrichtung dienen, separate Schnittstellen und damit Datenpfade bereit.

Über die separate Schnittstelle für die funktionsüberprüfungsrelevanten Daten kann von der erfindungsgemäßen Vorrichtung fortlaufend überprüft werden, ob eine ordnungsgemäße Funktion der internetfähigen Anzeige- und Eingabeeinrichtung gegeben ist. Nur dann, wenn dies der Fall ist, lässt die erfindungsgemäße Vorrichtung die Beeinflussung der Steuerung oder der Regelung des Arbeitsgeräts ausgehend von der internetfähigen Anzeige- und Eingabeeinrichtung zu. Damit wird einfach und zuverlässig die Gesamtsicherheit gewährleistet, und zwar auch dann, wenn die Anzeige- und Eingabeeinrichtung als solche keine Sicherheitsstandards erfüllt.

Vorzugsweise unterbindet dann, wenn das Überprüfungsmittel eine nicht-ordnungsgemäße Funktion der internetfähigen Anzeige- und Eingabeeinrichtung erkennt, das Überführungsmittel einen Austausch sicherheitsrelevanter, applikationsabhängiger Daten zwischen der Anzeige- und Eingabeeinrichtung und dem zu steuernden und/oder zu regelnden Arbeitsgerät. Diese Vorgehensweise ist zur Gewährleistung der Funktionssicherheit des Gesamtsystems aus Arbeitsgerät, internetfähiger Anzeige- und Eingabeeinrichtung sowie zwischen dieselben geschalteter Vorrichtung zur Anbindung der internetfähigen Anzeige- und Eingabeeinrichtung an das Arbeitsgerät bevorzugt.

Die Erfindung betrifft weiterhin ein Steuerungssystem eines über einen Datenbus zu steuernden und/oder zu regelnden Arbeitsgeräts, insbesondere eines über einen ISO-Datenbus zu steuernden und/oder zu regelnden landwirtschaftlichen Arbeitsgeräts, mit einer mit dem Arbeitsgerät gekoppelten erfindungsgemäßen Vorrichtung zur Anbindung einer internetfähigen Anzeige- und Eingabeeinrichtung an das über einen Datenbus zu steuernde und/oder zu regelnde Arbeitsgerät.

Ferner betrifft die Erfindung ein landwirtschaftliches Arbeitsgerät mit einer solchen Vorrichtung.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:

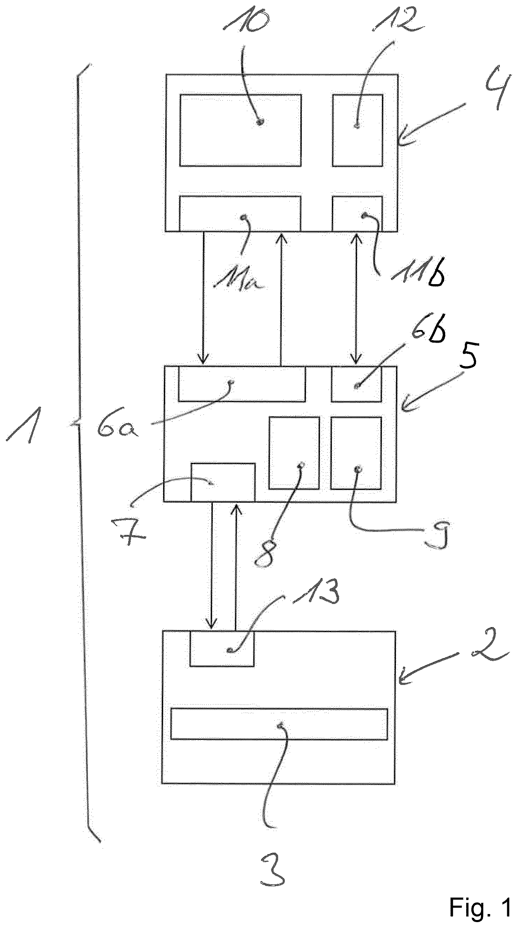

- Fig. 1: ein Blockschaltbild eines Steuerungssystems, welches eine Vorrichtung zur Anbindung einer internetfähigen Anzeige- und Eingabeeinrichtung an ein über einen Datenbus zu steuerndes und/oder zu regelndes Arbeitsgerät umfasst.

Fig. 1 zeigt stark schematisiert ein Steuerungssystem 1 für ein zu steuerndes und/oder zu regelndes Arbeitsgerät 2, wobei das zu steuernde und/oder zu regelnde Arbeitsgerät 2 einen Datenbus 3 umfasst, über welchen sicherheitsrelevante Daten für die Steuerung und/oder Regelung des Arbeitsgeräts 2 übertragen werden.

Nach der bevorzugten Anwendung der hier vorliegenden Erfindung handelt es sich beim Arbeitsgerät 2 um ein landwirtschaftliches Arbeitsgerät, welches zum Beispiel ein landwirtschaftliches Zugfahrzeug und ein landwirtschaftliches Anhängergerät umfasst, die dann über einen sogenannten ISO-Datenbus 3 sicherheitsrelevante Daten zur Steuerung und/oder Regelung des Arbeitsgeräts 2 austauschen.

Gemäß Fig. 1 ist weiterer Bestandteil des Steuerungssystems 1 eine internetfähige Anzeige- und Eingabeeinrichtung 4. Bei dieser internetfähigen Anzeige- und Eingabeeinrichtung 4 handelt es sich insbesondere um einen Tablet-Computer oder um ein Mobiltelefon. Bei einer solchen internetfähigen Anzeige- und Eingabeeinrichtung 4 handelt es sich um eine Einrichtung, die hinsichtlich der zu erfüllenden Sicherheitskriterien nicht die Standards des Arbeitsgeräts 2 erfüllt.

Um dennoch für das Steuerungssystem 1 die Sicherheitskriterien des Arbeitsgeräts 2 zu erfüllen, um also eine Kopplung der internetfähigen Anzeige- und Eingabeeinrichtung 4 an das zu steuernde und/oder zu regelnde Arbeitsgerät 2 zu ermöglichen und demnach eine Beeinflussung der Steuerung und/oder Regelung des Arbeitsgeräts 2 ausgehend von der internetfähigen Anzeige- und Eingabeeinrichtung 4 zuzulassen, wird erfindungsgemäß eine Vorrichtung 5 vorgeschlagen, die zwischen das zu steuernde und/oder zu regelnde Arbeitsgerät 2 und die an dasselbe zu koppelnde, internetfähige Anzeige- und Eingabeeinrichtung 4 geschaltet ist, und die die Funktionssicherheit des Steuerungssystems 1 als Ganzes gewährleistet.

Die Vorrichtung 5 umfasst erste Schnittstellen 6a, 6b zum Datenaustausch der Vorrichtung 5 mit der internetfähigen Anzeige- und Eingabeeinrichtung 4. Ferner umfasst die Vorrichtung 5 mindestens eine zweite Schnittstelle 7 zum Datenaustausch mit dem zu steuernden und/oder zu regelnden Arbeitsgerät 2. Die Vorrichtung 5 umfasst zusätzlich zu diesen Schnittstellen 6a, 6b und 7 ein Überprüfungsmittel 8 und ein Überführungsmittel 9.

Das Überprüfungsmittel 8 dient der Überprüfung einer ordnungsgemäßen Funktion der internetfähigen Anzeige- und Eingabeeinrichtung 4. Dann, wenn das Überprüfungsmittel 8 eine nicht-ordnungsgemäße Funktion der internetfähigen Anzeige- und Eingabeeinrichtung erkennt, überführt das Überführungsmittel 9 das Arbeitsgerät 2 in einen sicheren Zustand, insbesondere dadurch, dass eine Beeinflussung der Steuerung und/oder Regelung des Arbeitsgeräts 2 ausgehend von der internetfähigen Anzeige- und Eingabeeinrichtung 4 nicht weiter zugelassen wird.

Die Vorrichtung 5, die zwischen das zu steuernde und/oder zu regelnde Arbeitsgerät 2 und die internetfähige Anzeige- und Eingabeeinrichtung 4 geschaltet ist, überprüft demnach fortlaufend die ordnungsgemäße Funktion der internetfähigen Anzeige- und Eingabeeinrichtung 4 und lässt nur dann eine Beeinflussung sicherheitsrelevanter, steuerungsseitiger Daten bzw. Abläufe und/oder sicherheitsrelevanter, regelungsseitiger Daten bzw. Abläufe im Arbeitsgerät 2 ausgehend von der internetfähigen Anzeige- und Eingabeeinrichtung 4 zu, wenn die Vorrichtung 5, nämlich das Überprüfungsmittel 8 derselben, eine ordnungsgemäße Funktion der internetfähigen Anzeige- und Eingabeeinrichtung 4 erkennt.

Die Vorrichtung 5 bildet demnach einen Watchdog für die Anzeige- und Eingabeeinrichtung 4.

Die Vorrichtung 5 erhöht demnach die Funktionssicherheit einer internetfähigen Anzeige- und Eingabeeinrichtung 4 derart, dass dieselbe unter Gewährleistung der Gesamtsicherheit des Steuerungssystems 1 an ein busgesteuertes Arbeitsgerät 2 angekoppelt werden kann, nämlich derart, dass über die Anzeige- und Eingabeeinrichtung 4 steuerungsseitige und/oder regelungsseitige Daten und Abläufe des Arbeitsgeräts 2 beeinflusst werden können.

Die ersten Schnittstellen 6a, 6b der Vorrichtung 5, die dem Datenaustausch mit der internetfähigen Anzeige- und Eingabeeinrichtung 4 dienen, umfassen mindestens eine Schnittstelle 6a für den Datenaustausch sicherheitsrelevanter, applikationsabhängiger Daten mit einer Applikation 10, die auf der internetfähigen Anzeige- und Eingabeeinrichtung 4 installiert ist, sowie mindestens eine Schnittstelle 6b für den Datenaustausch funktionsüberprüfungsrelevanter Daten mit der Anzeige- und Eingabeeinrichtung 6b.

Die Anzeige- und Eingabeeinrichtung 4 umfasst korrespondierende Schnittstellen 11a und 11b, die mit den Schnittstellen 6a und 6b zusammenwirken und demnach dem Datenaustausch der entsprechenden Daten zwischen der Vorrichtung 5 und der Anzeige- und Eingabeeinrichtung 4 dienen.

Die über die Schnittstellen 6a, 11a ausgetauschten, applikationsabhängigen Daten der auf der Anzeige- und Eingabeeinrichtung 4 installierten Applikation 10 dienen der Beeinflussung der Steuerung und/oder Regelung des Arbeitsgeräts 2 ausgehend von der Applikation 10 der Anzeige- und Eingabeeinrichtung 4.

Die über die Schnittstellen 6b, 11b ausgetauschten, funktionsüberprüfungsrelevanter Daten dienen Überprüfung der ordnungsgemäßen Funktion der internetfähigen Anzeige- und Eingabeeinrichtung 4 durch die Vorrichtung 5, nämlich durch das Überprüfungsmittel 8 der Vorrichtung 5.

Gemäß Fig. 1 ist zusätzlich zur konkreten Applikation 10, die der Beeinflussung der Steuerung und/oder Regelung des Arbeitsgeräts 2 dient, auf der Anzeige- und Eingabeeinrichtung 4 weiterhin eine Funktionssicherheitskomponente 12 installiert. Hierbei kann es sich um eine Komponente handeln, die an der Schnittstelle 11b ein definiertes Funktionssicherheitssignal, z.B. ein zyklisches Alive-Signal, bereitstellt und an die Schnittstelle 6b der Vorrichtung 5 überträgt, wobei dann das Überprüfungsmittel 8 überprüft, ob dieses definierte Funktionssicherheitssignal ordnungsgemäß bereitgestellt wird. Nur dann, wenn dieses Funktionssicherheitssignal von der Anzeige- und Eingabeeinrichtung 4 ordnungsgemäß bereitgestellt und übertragen wird, schließt das Überprüfungsmittel 8 der Vorrichtung 5 auf eine ordnungsgemäße Funktion der Anzeige- und Eingabeeinrichtung 4.

Wird hingegen dieses Funktionssicherheitssignal von der Anzeige- und Eingabeeinrichtung 4 nicht oder nicht ordnungsgemäß bereitgestellt, so schließt dann das Überprüfungsmittel 8 der Vorrichtung 5 auf eine nicht-ordnungsgemäße Funktion der internetfähigen Anzeige- und Eingabeeinrichtung 4.

Gemäß Fig. 1 stellen die beiden Schnittstellen 6a, 6b der Vorrichtung 5 und die Schnittstellen 11a, 11b der internetfähigen Anzeige- und Eingabeeinrichtung 4 für die Übertragung sicherheitsrelevanter, applikationsabhängiger Daten sowie für die Übertragung funktionsüberprüfungsrelevanter Daten getrennte Datenpfade bereit. Die Übertragung funktionsüberprüfungsrelevanter Daten erfolgt demnach unabhängig von der Übertragung applikationsabhängiger Daten, so dass das Überprüfungsmittel 8 die Funktionsüberprüfung der Anzeige- und Eingabeeinrichtung 4 stets unabhängig von der Datenübertragung applikationsabhängiger Daten durchführen kann.

Dann, wenn das Überprüfungsmittel 8 der Vorrichtung 5 eine nicht ordnungsgemäße Funktion der Anzeige- und Eingabeeinrichtung 4 erkennen, unterbindet das Überführungsmittel 9 eine weitere Beeinflussung der Steuerung und/oder Regelung des Arbeitsgeräts 2 durch die Anzeige- und Eingabeeinrichtung 4 und überführt so dieselbe in einen sicheren Zustand.

Es kann vorgesehen sein, dass in diesem Fall das Überführungsmittel 9 einen weiteren Datenaustausch applikationsabhängiger Daten zwischen der Anzeige- und Eingabeeinrichtung 4 sowie dem Arbeitsgerät 2 vollständig unterbindet.

Ferner kann vorgesehen sein, dass bei Erkennen einer nicht ordnungsgemäßen Funktion der Anzeige- und Eingabeeinrichtung 4 durch das Überführungsmittel 9 am Datenbus 3 des Arbeitsgeräts 2 ein Statussignal bzw. eine Statusmeldung bereitgestellt wird, welches dann einzelne Baugruppen des Arbeitsgeräts 2 veranlasst, einen sicheren Betriebszustand einzunehmen.

Der Datenaustausch zwischen der Vorrichtung 5 und Arbeitsgerät 2 erfolgt über die oder jede zweite Schnittstelle 7 der Vorrichtung 5 und eine korrespondierende Schnittstelle 13 des Arbeitsgeräts 2.

Der Datenaustausch zwischen der Vorrichtung 5 und der internetfähigen Anzeige- und Eingabeeinrichtung 4 kann per Funkübertragung oder per Kabelübertragung erfolgen.

Der Datenaustausch der Vorrichtung 5 mit dem zu steuernden und/oder zu regelnden Arbeitsgerät 2 erfolgt vorzugsweise über eine Steckverbindung, über die die Vorrichtung 5 an das steuernde oder zu regelnde Arbeitsgerät 2 gekoppelt ist.

Die Erfindung ermöglicht demnach die Kopplung einer internetfähigen, an sich nicht sicherheitszertifizierten Anzeige- und Eingabeeinrichtung 4, wie zum Beispiel eines Tablet-Computers oder eines Mobiltelefons, an ein über einen Datenbus zu steuerndes, sicherheitszertifiziertes Arbeitsgerät 2, um unter Nutzung einer auf der Anzeige- und Eingabeeinrichtung 4 installierten Applikation 10 den Betrieb bzw. die Steuerung und/oder Regelung des Arbeitsgeräts 2 zu beeinflussen. Die Vorrichtung 5 gewährleistet hierbei die Gesamtsicherheit, indem die Vorrichtung 5 die ordnungsgemäße Funktion der internetfähigen Anzeige- und Eingabeeinrichtung 4 fortlaufend überprüft.

Sollte ein Fehler bzw. eine nicht-ordnungsgemäße Funktion der Anzeige- und Eingabeeinrichtung 4 durch die Vorrichtung 5 erkannt werden, so unterbindet dieselbe die weitere Beeinflussung des Arbeitsgeräts 2 ausgehend von der Anzeige- und Eingabeeinrichtung 4, indem dieselbe zum Beispiel die weitere Kommunikation zwischen Arbeitsgerät 2 und Anzeige- und Eingabeeinrichtung 4 unterbindet.

Die Vorrichtung 5 kann demnach bei Erkennen einer nicht-ordnungsgemäßen Funktion der Anzeige- und Eingabeeinrichtung 4 die Kommunikation zwischen der Anzeige- und Eingabeeinrichtung 4 und dem Arbeitsgerät 5 selbständig bzw. selbsttätig und damit automatisch unterbrechen und damit bei nichtordnungsgemäßer Funktion der Anzeige- und Eingabeeinrichtung 4 das Steuerungssystem 1 in einen sicheren Zustand überführen. Dabei werden insbesondere, wie bereits ausgeführt, zum Datenaustausch zwischen der Vorrichtung 5 und der Anzeige- und Eingabeeinrichtung 4 für den Datenaustausch applikationsabhängiger Daten und den Datenaustausch funktionsüberprüfungsrelevanter Daten separate Datenschnittstellen bzw. Datenpfade bereitgestellt.

Die Erfindung findet bevorzugt Verwendung in landwirtschaftlichen Applikationen.

Die Erfindung kann jedoch auch in nicht landwirtschaftlichen Applikationen wie zum Beispiel in Applikationen der Automobilindustrie, der Fertigungstechnik oder bei Industrieanlagen zum Einsatz kommen.

### Bezugszeichenliste

- 1: Steuerungssystem
- 2: Arbeitsgerät
- 3: Datenbus
- 4: Anzeige- und Eingabeeinrichtung
- 5: Vorrichtung
- 6a: Schnittstelle
- 6b: Schnittstelle
- 7: Schnittstelle
- 8: Überprüfungsmittel
- 9: Überführungsmittel
- 10: Applikation
- 11a: Schnittstelle
- 11b: Schnittstelle
- 12: Funktionssicherheitskomponente
- 13: Schnittstelle

## Patentansprüche

1. Vorrichtung (5) zur Anbindung einer internetfähigen Anzeige- und Eingabeeinrichtung (4), insbesondere eines Tablet-Computers oder eines Mobiltelefons, an ein über einen Datenbus (3) zu steuerndes und/oder zu regelndes Arbeitsgerät (2) **dadurch gekennzeichnet, dass** die Vorrichtung mindestens eine erste Schnittstelle (6a, 6b) zum Datenaustausch mit der internetfähigen Anzeige- und Eingabeeinrichtung (4) aufweist, mindestens eine zweite Schnittstelle (7) zum Datenaustausch mit dem zu steuernden und/oder zu regelnden Arbeitsgerät (2) aufweist, ein Überprüfungsmittel (8) zur Überprüfung einer ordnungsgemäßen Funktion der internetfähigen Anzeige- und Eingabeeinrichtung (4) aufweist, und ein Überführungsmittel (9) aufweist, um dann, wenn das Überprüfungsmittel (8) eine nicht-ordnungsgemäße Funktion der internetfähigen Anzeige- und Eingabeeinrichtung (4) erkennt, das Arbeitsgerät (2) in einen sicheren Zustand zu überführen und wobei dann, wenn das Überprüfungsmittel (8) eine nicht-ordnungsgemäße Funktion der internetfähigen Anzeige- und Eingabeeinrichtung (4) erkennt, das Überführungsmittel (9) einen Datenaustausch sicherheitsrelevanter, applikationsabhängiger Daten zwischen der Anzeige- und Eingabeeinrichtung (4) und dem zu steuernden und/oder zu regelnden Arbeitsgerät (2) unterbindet.

2. Vorrichtung nach Anspruch 1, **dadurch gekennzeichnet, dass** die oder jede erste Schnittstelle (6a, 6b), die dem Datenaustausch mit der internetfähigen Anzeige- und Eingabeeinrichtung (4) dient, für den Datenaustausch sicherheitsrelevanter, applikationsabhängiger Daten zwischen einer Applikation (10) der internetfähigen Anzeige- und Eingabeeinrichtung (4), die der Beeinflussung der Steuerung und/oder Regelung des Arbeitsgeräts (2) dienen, und für den Datenaustausch funktionsüberprüfungsrelevanter Daten, die der Überprüfung der ordnungsgemäßen Funktion der internetfähigen Anzeige- und Eingabeeinrichtung (4) dienen, separate Schnittstellen (6a, 6b) und damit Datenpfade bereitstellen.

3. Vorrichtung nach einem der Ansprüche 1 bis 2, **dadurch gekennzeichnet, dass** dann, wenn das Überprüfungsmittel (8) eine nicht-ordnungsgemäße Funktion der internetfähigen Anzeige- und Eingabeeinrichtung (4) erkennt, das Überführungsmittel (9) eine entsprechende Statusmeldung am Datenbus (3) des zu steuerndes und/oder zu regelndes Arbeitsgeräts (2) bereitstellt.

4. Vorrichtung nach einem der Ansprüche 1 bis 3, **dadurch gekennzeichnet, dass** dann, wenn das Überprüfungsmittel (8) eine nicht-ordnungsgemäße Funktion der internetfähigen Anzeige- und Eingabeeinrichtung (4) erkennt, das Überführungsmittel (9) eine Beeinflussung des Arbeitsgeräts (2) ausgehend von der Anzeige- und Eingabeeinrichtung (4) unterbindet.

5. Vorrichtung nach einem der Ansprüche 1 bis 4, **dadurch gekennzeichnet, dass** dieselbe mit der internetfähigen Anzeige- und Eingabeeinrichtung (4) Daten per Funkübertragung austauscht.

6. Vorrichtung nach einem der Ansprüche 1 bis 4, **dadurch gekennzeichnet, dass** dieselbe mit der internetfähigen Anzeige- und Eingabeeinrichtung (4) Daten per Kabelübertragung austauscht.

7. Vorrichtung nach einem der Ansprüche 1 bis 6, **dadurch gekennzeichnet, dass** dieselbe mit dem steuernden und/oder zu regelnden Arbeitsgerät (2) Daten per Steckverbindung austauscht.

8. Steuerungssystem (1) eines über einen Datenbus (3) zu steuernden und/oder zu regelnden Arbeitsgeräts (2), mit einer mit dem Arbeitsgerät (2) gekoppelten Vorrichtung (5) nach einem der Ansprüche 1 bis 7, und mit einer internetfähigen Anzeige- und Eingabeeinrichtung (4).

9. Steuerungssystem (1) nach Anspruch 8, wobei der Datenbus (3) ein ISO-Datenbus und das Arbeitsgerät (2) ein landwirtschaftliches Arbeitsgerät ist.

10. Landwirtschaftliches Arbeitsgerät mit einem Steuerungssystem nach Anspruch 9.

## Claims

1. A device (5) for connecting an Internet-capable display and input device (4), in particular a tablet computer or a mobile phone, to a working device (2) which is to be open-loop and/or closed-loop controlled by way of a data bus (3), **characterised in that** the device has at least one first interface (6a, 6b) for data exchange with the Internet-capable display and input device (4), at least one second interface (7) for data exchange with the working device (2) which is to be open-loop and/or closed-loop controlled, a checking means (8) for checking a proper function of the Internet-capable display and input device (4), and a transfer means (9) in order to transfer the working device (2) into a secure state when the checking means (8) detects an improper function of the Internet-capable display and input device (4) and wherein the transfer means (9) prevents data exchange of security-relevant application-dependent data between the display and input device (4) and the working device (2) which is to be open-loop or closed-loop controlled when the checking means (8) detects an improper function of the Internet-capable display and input device (4)

2. A device according to claim 1 **characterised in that** the or each first interface (6a, 6b) which serves for the data exchange with the Internet-capable display and input device (4) provide separate interfaces (6a, 6b) and thus data paths for the data exchange of security-relevant application-dependent data between an application (10) of the Internet-capable display and input device (4), that serve to influence the open-loop and/or closed-loop control of the working device (2), and for the data exchange of function checking-relevant data which serve for checking of the proper function of the Internet-capable display and input device (4),.

3. A device according to claim 1 or claim 2 **characterised in that** when the checking means (8) detects an improper function of the Internet-capable display and input device (4) the transfer means (9) provides a corresponding status message on the data bus (3) of the working device (2) which is to be open-loop or closed-loop controlled.

4. A device according to one of claims 1 to 3 **characterised in that** when the checking means (8) detects an improper function of the Internet-capable display and input device (4) the transfer means (9) prevents influencing of the working device (2) from the display and input device (4).

5. A device according to one of claims 1 to 4 **characterised in that** same exchanges data with the Internet-capable display and input device (4) by radio transmission.

6. A device according to one of claims 1 to 4 **characterised in that** same exchanges data with the internet-capable display and input device (4) data by cable transmission.

7. A device according to one of claims 1 to 4 **characterised in that** same exchanges data with the working device (2) which is to be open-loop and/or closed-loop controlled by a plug connection.

8. A control system (1) of a working device (2) which is to be open-loop or closed-loop controlled by way of a data bus (3), with a device (5) coupled to the working device (2) according to one of claims 1 to 7, and with an Internet-capable display device and input device (4).

9. A control system according to claim 8 wherein the dtat bus (3) is an ISO data bus (3) and the working device (2) is an agricultural implement

10. An agricultural implement with a control system according to claim 9.

## Revendications

1. Dispositif (5) pour la connexion d'un équipement d'affichage et de saisie compatible Internet (4), en particulier d'un ordinateur-tablette ou d'un téléphone portable, à un appareil de travail (2) à commander et/ou à réguler par l'intermédiaire d'un bus de données (3), **caractérisé en ce que** le dispositif comprend au moins une première interface (6a, 6b) pour échanger des données avec l'équipement d'affichage et de saisie compatible Internet (4), au moins une deuxième interface (7) pour échanger des données avec l'appareil de travail (2) à commander et/ou à réguler, un moyen de contrôle (8) pour contrôler un fonctionnement correct de l'équipement d'affichage et de saisie compatible Internet (4), et un moyen de transfert (9) pour, si le moyen de contrôle (8) détecte un fonctionnement incorrect de l'équipement d'affichage et de saisie compatible Internet (4), transférer l'appareil de travail (2) dans un état de sécurité, le moyen de transfert (9) interdisant, si le moyen de contrôle (8) détecte un fonctionnement incorrect de l'équipement d'affichage et de saisie compatible Internet (4), un échange de données de données relatives à la sécurité et liées à l'application entre l'équipement d'affichage et de saisie (4) et l'appareil de travail à commander et/ou à réguler (2).

2. Dispositif selon la revendication 1, **caractérisé en ce que** la ou chaque première interface (6a, 6b) qui sert à l'échange de données avec l'équipement d'affichage et de saisie compatible Internet (4) fournit des interfaces (6a, 6b) et donc des chemins de données séparés pour l'échange de données de données relatives à la sécurité et liées à l'application entre une application (10) de l'équipement d'affichage et de saisie compatible Internet (4), lesquelles servent à agir sur la commande et/ou la régulation de l'appareil de travail (2), et pour l'échange de données de données relatives au contrôle fonctionnel, lesquelles servent à contrôler le fonctionnement correct de l'équipement d'affichage et de saisie compatible Internet (4).

3. Procédé selon une des revendications 1 à 2, **caractérisé en ce que**, si le moyen de contrôle (8) détecte un fonctionnement incorrect de l'équipement d'affichage et de saisie compatible Internet (4), le moyen de transfert (9) fournit un message d'état correspondant au bus de données (3) de l'appareil de travail (2) à commander et/ou à réguler.

4. Dispositif selon une des revendications 1 à 3, **caractérisé en ce que**, si le moyen de contrôle (8) détecte un fonctionnement incorrect de l'équipement d'affichage et de saisie compatible Internet (4), le moyen de transfert (9) interdit une action sur l'appareil de travail (2) à partir de l'équipement d'affichage et de saisie (4) .

5. Dispositif selon une des revendications 1 à 4, **caractérisé en ce qu'**il échange des données avec l'équipement d'affichage et de saisie compatible Internet (4) par radiotransmission.

6. Dispositif selon une des revendications 1 à 4, **caractérisé en ce qu'**il échange des données avec l'équipement d'affichage et de saisie compatible Internet (4) par transmission par câble.

7. Dispositif selon une des revendications 1 à 6, **caractérisé en ce qu'**il échange des données avec l'appareil de travail (2) à commander et/ou à réguler par connecteur enfichable .

8. Système de commande (1) d'un appareil de travail (2) à commander et/ou à réguler par l'intermédiaire d'un bus de données (3), comprenant un dispositif (5) à coupler à l'appareil de travail (2) selon une des revendications 1 à 7, et comprenant un équipement d'affichage et de saisie compatible Internet (4).

9. Système de commande (1) selon la revendication 8, le bus de données (3) étant un bus de données ISO et l'appareil de travail (2) étant un appareil de travail agricole.

10. Appareil de travail agricole comprenant un système de commande selon la revendication 9.
